# EUROPEAN PATENT APPLICATION

(11) **EP 2 690 515 A2**
(43) Date of publication of application: **29.01.2014**
(21) Application number: 13177759.1
(22) Date of filing: 24.07.2013
(51) Int. Cl.: G05B 19/409

(54) **Method for controlling and activating a user interface and device and installation using such a method and interface**

(30) Priority: 25.07.2012 IT TV20120139
(71) Applicant: ISIS Srl, 31038 Paese (TV) (IT)
(72) Inventor: Paccagnan, Diego, 31100 Treviso (IT)
(74) Representative: Dragotti, Gianfranco

(57) **Abstract**

A method is described for providing a contextual user graphical interface on a portable computerized control device for industrial installations, said device comprising a screen, a CPU, a memory and a spatial coordinates detector. The method comprising the steps of detecting the spatial coordinates of the device relatively to the installation and viewing on the screen user interface parts related to the installation and that are related to detected spatial coordinates. It is also described an industrial installation (10) which comprises a control unit (12) and a portable computerized control device (13) connected through a wireless communication channel (14) to the control unit. The portable computerized device (14) showing different parts of the graphical user interface as a function of spatial coordinates of the device, detected by the spatial coordinates detector, in relation to parts (11) of the installation.

## Description

The present invention relates to a method for controlling and activating a user interface. More particularly, the present invention relates to such a method used in portable devices, preferably with a touch screen display for controlling industrial installations. Here "industrial installations" is understood as meaning also operating machines and plants for carrying out industrial processes. The invention also relates to an industrial installation with a portable wireless control device.

Usually, automatic industrial installations are controlled by programmable logic controller (PLC) systems. The production and maintenance operators interact with the automated system by means of PC-based graphic interfaces (HMI). The PCs are typically contained inside protective cabinets and positioned centrally with respect to the controlled process.

Usually the control console is in a fixed position from which the operator does not always has an adequate vision of the process or installation on which must intervene. This can worsen the precision of the operator control on the installation, forcing him to leave the console to get closer to the part to be checked before returning to the console. When fast reactions of the operator are required to situations present in the installation, the transfer time to the console can significantly worsen the result of the inspection.

Portable devices with sufficient calculation power and an intuitive graphical interface are widespread in many applications for daily use (telephones, reproduction of multimedia content, electronic diaries), but are not yet used in an industrial environment.

Mobile devices could solve the problem of the need to move form the installation to the console, allowing the operator to operate directly at the interest point of the installation. However, the small size of the screens of the portable interfaces would force the operator to navigate through multiple screens and menus, frustrating in some cases the speed of response that it might have by not having to move between the installation point and the control console.

In order to maximize the dimensions of the interfaces on the screen compared to the dimensions of the devices in the art for some time user interfaces which use touch-screen displays have been known. These interfaces result in a more intuitive controlling action, owing to the simple activation of the various control zones of the interface. A light pressure exerted with a finger by the user on a control zone or icon of the interface is generally sufficient to cause activation of the associated command. The larger dimensions of the screen reduce the difficulty of navigating on the interface and increase the control ease.

In some application environments and with certain types of devices, this simple control action may constitute a disadvantage. For example, in the case of industrial machine or process control, the risk of unintentional activation of commands in some cases is a deterrent for using touch-screen interfaces. Furthermore, in the case where the control device is a portable device the risk of entering commands owing to inadvertent touching of the touch screen (for example due to the user simply gripping the device) makes these interfaces totally unusable.

Applications, based for example on an iOS or Android platform, which allow remote control of PCs by means of portable wireless devices using touch-screen displays, exist on the market. It would be of interest, therefore, to use these applications in order to control PCs on which HMI applications operate and therefore control a machine or a production installation.

These known applications, however, do not deal with the problem of safe use of the installation and are therefore not considered suitable for use in an industrial environment. In particular, they do not deal with the problem of unintentional activation of devices.

A general object of the present invention is to provide a method for activating and controlling a user interface which allows a more easy and safe use of such an interface in an industrial environment. Further objects of the invention relate to providing a user interface, a device for controlling an industrial installation and an industrial installation with easy and safe activation functions.

In view of these objects the idea has occurred to devise, according to the invention, a method for providing a contextual user graphical interface on a portable computerized control device for industrial installations, said device comprising a screen, a CPU, a memory, and a spatial coordinates detector, the method comprising the steps of: detecting the spatial coordinates of the device relative to the installation and visualising on the screen user interfaces parts relating to the installation that are correlated to the detected spatial coordinates.

Still in view of the objects of the invention it is also thought to realize an industrial installation comprising a control unit and a portable computerize control device connected through a wireless communication channel to the control unit, the portable computerized device comprising a screen, a CPU, a memory and a spatial coordinates detector, the screen showing different parts of a graphical interface on CPU command as a function of spatial coordinates of the device, detected by the spatial coordinates detector of the device, relatively to plant parts.

Finally, it has been thought to provide an interface for a portable control device, in accordance with that claimed.

In order to illustrate more clearly the innovative principles of the present invention and its advantages compared to the prior art, an example of embodiment applying these principles will be described below, with the aid of the accompanying drawings. In the drawings:
- Figure 1 shows a schematic view of an industrial installation according to the invention;
- Figure 2 shows a schematic view of a portable control device according to the invention for an industrial installation;
- Figures 3 to 6 show schematic views of a user interface of the control device according to the invention during various operating steps;
- Figures 7 to 9 show schematic views of the user interface of the control device in an enabled operating condition for entering commands;

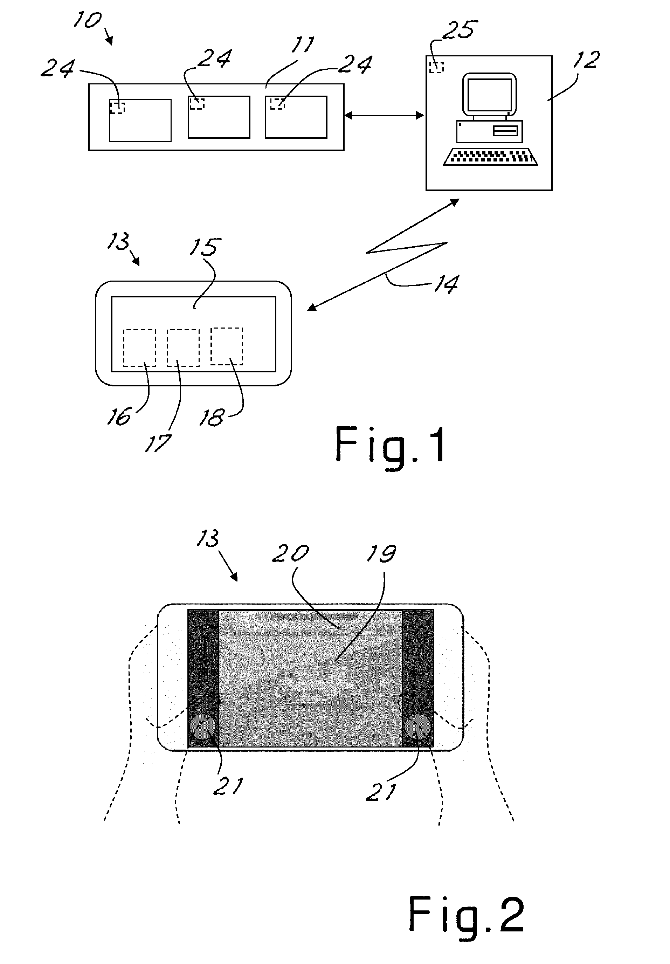

With reference to the figures, Figure 1 shows in schematic form an industrial installation - denoted overall by 10 - which may comprise operating units 11 for carrying out industrial machining operations, production and/or processes. The nature of these operating units may be varied, being substantially of any type known per se. For example, the various operating units may be connected together in sequence so as to be interdependent and carry out as a whole the intended function of the installation (painting, machining, chemical production, etc.).

The installation comprises a control unit 12, known per se, for managing operation - which is usually automatic - of the installation. This control unit may comprise or be formed by one or more personal computers which are interconnected in a network and suitably programmed, assisted, where necessary, by known PLCs. The personal computers are typically contained inside protection cabinets and positioned centrally with respect to the controlled installation.

The installation also comprises a remote control and operating unit in the form of a portable computerized control device 13 connected via a wireless communications channel 14 to the control unit 12.

The portable device 13 in turn comprises a graphical screen 15, advantageously touch screen, a CPU 16 and a memory 17. The CPU may be advantageously programmed by means of a suitable program entered into the memory 17 so as to perform the functions provided and implement the method and the interface as explained below.

Advantageously, the device 13 comprises a detector 18 for detecting the geographical coordinates of its position with respect to the various operating parts of the plant. This detector 18 may be realized according to varied known technologies. It can be provided, for example, with a GPS satellite system and/or being part of a system for detecting the relative position with respect to the units of the installation by means of suitable known emitting units and/or position sensors 24 arranged in the vicinity of the various units or zones 11 of the installation and detected and/or in communication with the detector 18. Alternatively or in addition, there may also be provided one or more global position referencing units 25 to which the detector 18 refers in order to determine its absolute position with respect to the installation, substantially providing in the local environment a GPS triangulation system based on units 25 in communication with the transmitting and/receiving detector 18. By knowing the layout of the installation the portable device is thus able to determine its own relative position with respect to the various parts of the installation.

A position detection system of a device with respect to predefined references is in any case known per se and will not be described or shown further here, being able to be easily imagined by the person skilled in the art on the basis of the present description.

The detector 18 may advantageously comprise a known orientation detector (for example an electronic compass and/or an inertial system) and the spatial coordinates detected may thus comprise also information about the spatial orientation of the device.

As can be clearly seen in Figure 2, the device 13 may be advantageously designed with a horizontally elongated form and be intended to be gripped by the user with both hands, as shown schematically in broken lines.

As can be clearly seen in Figure 2, the device 13 shows on the touch screen an image 19 of a user interface which comprises a plurality of graphical control elements 20 which can be activated by the user's touch. The graphical elements may be of any type useful for controlling and operating the installation by means of the device. They may comprise for example graphical images of installation parts and/or machines with associated icons for interaction between the user and these parts and machines. For example, the controls may comprise controls for setting operation of the installation and/or controls useful for maintenance such that the user may form part the personnel responsible for managing the installation and/or form part of the personnel responsible for carrying out maintenance. Two or more devices 13 with a different interface and controls depending on the user for whom they are intended may also be provided.

Advantageously, the device 13 comprises on the graphical screen in the proximity of the lateral edge of the screen at least one interface enabling icon 21.

In particular, as will be clarified below, the icons 21 are advantageously two in number, being arranged in the vicinity of opposite right-hand and left-hand edges of the screen, respectively, so as to be each manoeuvrable with one of the two thumbs of the user when holding the device with both hands.

The icon has a first steady rest position (shown for example in Figure 2) and is translatable between the rest position and a position for enabling the interface by means of touch and dragging by the user on the touch screen.

Advantageously, the translating movement of the icon from the rest position to the enabling position is vertical and, preferably, from the bottom upwards. Preferably, the rest position is close to the bottom edge of the screen and the enabling position is close to the top edge of the screen.

The exact amount of the translatory movement of the icon may depend also on the dimensions of the screen and its orientation. Basically, the departure point and arrival point of the displaceable icon may be advantageously chosen so as to be easily reached by the thumb while gripping the device, without having to move one's hand.

In the case of devices with relatively small dimensions (for example about 3.5 to 5 inches, preferably of the horizontal wide-screen type) these two positions may be in reality close to the bottom and top edges of the screen. In the case of larger size devices (for example with screens of about 9-11 inches, preferably of the horizontal wide-screen type), the departure position will be advantageously close to where the thumb of the hand gripping the device is situated and the arrival position at a point which corresponds to the maximum height which can be reached by the thumb without moving the hand. The departure and arrival points may also be configured depending on the requirements and/or preferences of the user, for example so as to adapt the travel of the releasing icons to the size of the user's hand.

While movement of the icon from the rest position into the enabling position is manual, the opposite movement is automatic, such that the icon returns automatically from the enabling position into the rest upon release of the touch thereon. In the case of two enabling icons, advantageously each icon causes simultaneously the movement of the other icon so that the user may move both icons by operating only one of them and, if required, change the hand operating them.

When the icon 21 is in the rest position, the interface 19 is disabled and any touching of the interface controls on the touch screen will not activate these controls.

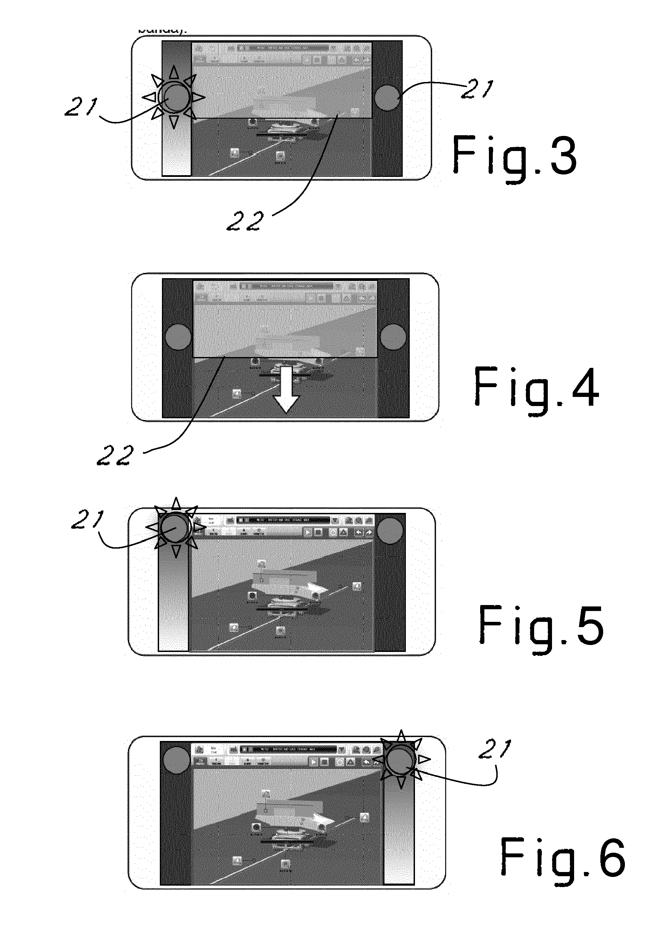

Advantageously, the user interface is instead enabled when the user moves and keeps the icon 2 in the enabling position by means of touch pressure. Figure 3 shows by way of example operation of the left-hand icon. For the sake of clarity the finger which performs the movement is not shown and is replaced by a star-like symbol schematically indicating activation of the icon.

Advantageously, as can be clearly seen in Figure 3, the interface image also comprises a picture wipe effect which moves on the screen together with the enabling icon so as to uncover the graphical control elements upon movement of the enabling icon from the rest position into the enabling position. Still advantageously, the picture wipe is semi-transparent such that the controls of the user interface are always displayed even if they appear "dimmed" when disabled (picture wipe pulled down on the interface) so as to give a clear indication as the enabled or disabled state of the interface.

If the distance travelled by the icon or icons is not the same as that of any picture wipe present, so as to uncover the interface completely, a proportional relative movement of the icon and wipe is possible for example, such that the ends of the icon travel movement will correspond to the start and the finish of the wipe movement so that the interface is completely covered or uncovered.

Figure 4 shows release of the icon with the consequent movement of the icon (and the wipe, when present) back into the rest position, so as to disable the user interface when the icon is or moves into the rest position.

Figure 5 shows on the other hand the icon (and any wipe) moved completely into the enabling position. In this position, the entire interface is enabled and may accept commands caused by touching the sensitive surface of the screen. Advantageously, when the icon is completely in the enabling position, the picture wipe is completely removed, so as to have the entire height of the screen available for the control interface.

Figure 6 shows the situation where the right-hand icon is pressed instead of the left-hand icon so that the interface is kept enabled while changing, however, the hand used for activation. Advantageously, a small delay (for example 2 seconds) may be envisaged before complete release of the icons (namely interruption of the touching pressure on them) is detected and the icons are automatically displaced by the device back into the rest position. In this way, momentary release or not completely synchronized transfer of the touching pressure from one icon to another does not inconveniently disable the interface.

When the device 13 is connected by mean of a wireless transmission to the control unit 12 of the industrial installation, it may be advantageously envisaged that the parts of the installation controlled by the user by means of the portable device 13 are automatically disabled when the said enabling icon is or moves into the said rest position.

In this way, when the user releases the icon 2 for activating command recognition, the devices of the installation controlled by the user via the portable device are set to a safe condition; for example any motors are switched off and moving parts are stopped. This may be useful for example during maintenance operations.

Owing to the fact that the portable device is equipped with a spatial coordinates detector 18 can also be provided the detection of the spatial coordinates of the device and the graphical control elements can be displayed on the interface as a function of the detected coordinates, selecting the elements from a set of graphical control elements provided in the device memory or sent to it from the fixed system. In this way, the screens changes automatically according to the installation area in which the user is or moves with the device 13, providing a useful contextual interface which refers to the part of the installation where device is at the moment. This allows for example to reduce the number of commands and information simultaneously displayed and/or the complexity of navigation interface.

Advantageously, when the device also comprises an orientation detector, the spatial coordinates detected may also comprise device orientation information so that only that which of interest to the user looking at an installation zone is displayed.

The conventional applications for displaying the installation generally consist of various pages through which the user has to flick in order to find the area which is to be controlled.

Owing to the solution described above, the device 13 may instead for example show the area of the installation and/or the associated controls which correspond to the hypothetical visual cone of the user grasping the device at the moment, based on the position and orientation of the device, in case by means of suitable heuristics which at this point may be easily imagined by the person skilled in the art. With a contextual interface, it can be avoided the user to control erroneously an installation part not visible or not of interest at the moment.

In addition or alternatively, when the position of the device is located by means of the detector 18, only the devices controlled by means of the device and situated in the vicinity of the device 13 and therefore in the vicinity of the user can be set to the safe condition. This overcomes any safety problems which may arise from the user mobility associated with use of a portable wireless device.

In other words, when the portable device is provided with a spatial coordinates detector, the method according to the invention may comprise the further steps of detecting the spatial coordinates of the device and disabling parts of the installation situated within a predetermined distance from the spatial coordinates detected when the said enabling icon (if present) is or moves into the said rest position. This distance may be determined as being safe for the user, also depending on the parts close to which the user is positioned and, essentially, the danger which they pose.

In the case of installation parts (or operating appliances) where contact with the user must be avoided owing to the risk for the safety of the user (for example presses or other particularly dangerous moving parts) it may be envisaged that operation of these parts is activated only when pressing both icons using both hands. As soon as no pressure is applied by one hand, the appliance will be set to the safety condition, namely switched off.

According to this operating mode, essentially the spatial coordinates of the device are detected by means of the detector 18 and, if the two enabling icons are not in the said enabling position and are not simultaneously touched by the user, installation zones which are situated within a predetermined (potentially dangerous) distance from the spatial coordinates detected will be disabled. The actual distance will depend on the type of moving part and its radius of action considered to be dangerous.

The interface according to the invention may comprise a further advantageous feature when it is in the enabled state. In fact, for example, owing to the need to keep preferably two side zones free for vertical displacement of the two enabling icons, the central image of the control interface may be reduced to the point of making it difficult to operate in a precise and safe manner the graphical control elements which can be touch-activated, these control elements being in turn be advantageously formed as small icons. This may be a problem in particular in the case of a large number of graphical control elements situated within the same interface screen.

In view of the dimensions of the screen compared to the area which may be touch-selected, the user has difficulty in distinguishing between devices situated close to each other without using enlargement of the screen area. This may be performed by means of known pinch-and-zoom functions. The negative aspect of using a pinch-and-zoom function is that part of the control area is no longer displayed.

But the method for managing the interface according to the invention comprises advantageously the further feature of detecting the duration of the touch performed by the user on the contact point of the touch screen and, when the interface is enablied, an enlarged interface zone is displayed in the vicinity of this point if the touch duration detected is longer than a predetermined time interval (for example 3 seconds).

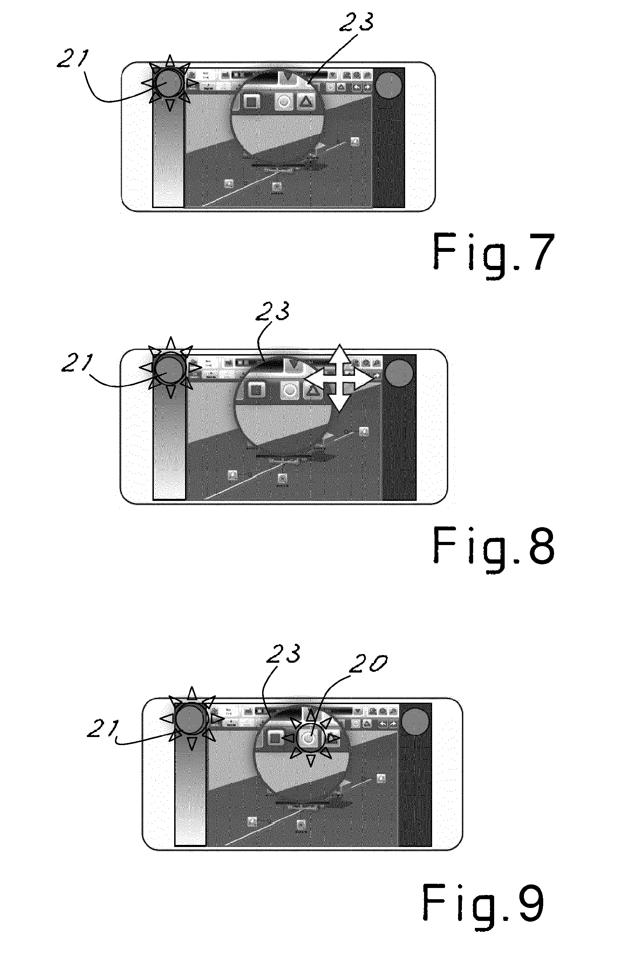

Such a situation is shown, for example, in Figure 7. The enlarged zone advantageously appears as a circular magnifying lens on the interface. The control elements present within the lens can be activated even when enlarged. It is thus possible to activate by means of touch pressure more precisely and more reliably the control elements which are present on the interface.

This mode of operation is more advantageous than the use of normal pinch-and-zoom functions which are usually used with touch-screen interfaces, since the latter functions are useful for users who are trying to identify the devices of interest to them within the screen, while expert users (such as those who generally use and operate industrial installations) already know where the device or control of interest to them is situated and merely wish to enlarge it in order to make the detail more visible or in order to operate with precision the corresponding device or function. In this case, the enlargement system according to the present invention is more advantageous and faster.

Advantageously, the enlarged zone is reset to its non-enlarged size only after a second predetermined time interval (for example 3 seconds) has lapsed from the end of the touching contact which caused enlargement. This advantageously allows one to perform enlargement, release the enlarging touch and activate the control within the enlarged zone before the enlarged zone disappears (as shown schematically in Figure 9). The system may detect the duration of the touch and the double touch in order to distinguish the enlarging touch from the control touch.

Again advantageously, the interface zone which is enlarged may be moved with a movement of the contact point by the user, dragging it on the interface, as schematically shown in Figure 8. Advantageously the edge of the lens may be always kept within the edge of the screen.

This enlarging system, combined to the contextual interface, allow a high efficiency and rapidity of use also with relatively small screens.

At this point it is clear how the predefined objects have been achieved.

The portable device can have several modes of operation depending on its position (and, if desired, orientation) with respect to the installation. This greatly simplifies the installation control. Only interesting parts of the interface can be displayed gradually, creating a contextual interface.

Moreover, advantageously the device can have two operating modes in relation to recognition of the user commands: active mode and non-active mode. The device recognizes the user's commands entered on the interface when in active mode, but does not accept them in non-active mode.

The user may advantageously use the device in a horizontal position, with both hands. When equipped with the activation features described, for set active mode, the user's thumb moves along the entire height of the screen the special icon which is displayed as or together with a semi-transparent picture wipe (moving upwards in the preferred instance). The device then remains active until the thumb is raised (by means of suitable known heuristics it is possible to detect separation of the thumb from the screen for a significant amount of time). When the thumb is raised, the picture wipe moves back down (with a kind of spring return action) and detection of the commands is deactivated.

Owing to the system according to the invention, if the operator/maintenance engineer has with him/her the interface for interaction with the installation, the operator may monitor the production process where necessary (and not from distant consoles as generally occurs in the prior art). Moreover the operator/engineer may immediately manage anomalous situations, without the need to reach the HMI.

In the presence of a conventional HMI the operator who is situated opposite the process or installation and must solve a problem needs time in order to reach the HMI from where the command must be sent.

On the other hand, the operator who situated at a conventional HMI, in order to respond quickly to an anomalous situation, cannot see the process or installation or therefore cannot always take effective action.

When the position of the conventional HMI is not suitable for viewing the process and the necessary reaction times must be very rapid compared to the transfer times, a portable interface according to the invention therefore improves the production quality and reduces the number of rejects.

Another advantage arising from use of a portable device according to the invention consists in the lower purchase price and maintenance costs.

Moreover, since the system according to the invention avoids the risk of unintentional activation of the portable device, this portable device may be used extensively without causing either material damage during production or harm to persons working in the production premises.

Owing to the principles of the invention the installation may be made safe when the user is in an unauthorized area.

Obviously, the above description of an embodiment applying the innovative principles of the present invention is provided by way of example of these innovative principles and must therefore not be regarded as limiting the scope of the rights claimed herein.

For example the image used for the interface and the appearance of the enabling icon or icons may be of any kind depending on the specific requirements or wishes of the design engineer. Moreover, the installation and the form of the control device may also be of any nature. If desired, the control device may also comprise further physical devices (such as keyboards, trackballs, etc.) for entering commands.

The interface enabling system according to the invention may also be realized implementing the method using suitable software applications (for example based on an iOS or Android platform), these being installed in generic portable touch-screen devices, both replacing conventional HMI as the interface for new installations, and converting/supplementing already existing conventional HMI with portable HMI, without the need to develop new control software for the installation.

## Claims

1. Method for providing a contextual user graphical interface on a portable computerized control device for industrial installations, said device comprising a screen, a CPU, a memory, and a spatial coordinates detector, said method comprising the steps of detecting the spatial coordinates of the device with respect to installation and visualising on the screen user interface parts relative to the installation and that are correlated to the detected spatial coordinates.

2. Method according to claim 1, wherein graphical control elements are visualised by selecting them, depending on the detected coordinates, from a group of graphical control elements present in the device memory.

3. Method according to claim 1, comprising the further steps of disabling parts of the installations situated within a predetermined distance from the spatial coordinates detected.

4. Method according to claim 3, wherein the disabling is also function of a command on the user interface by the user.

5. Method according to claim 1, wherein the device comprises an orientation detector and the said spatial coordinates comprise device orientation information.

6. Method according to claim 5, wherein on the user interface an area of the installation and/or the associated controls are shown, which correspond, based on the spatial coordinates that comprise a device orientation information, to an hypothetical visual cone of the user grasping the device.

7. Method according to claim 1, in which the device is provided with a touch screen and the said method comprises the further steps of:
- providing on the touch screen an user interface image comprising graphical control elements activable by a touch of the user;
- providing on the graphical screen in the proximity of the lateral edge of the screen at least one interface enable icon, said icon having a steady rest position, being translatable between the rest position and an interface enabling position by means of touch and drag by the user on the touch screen and with automatic return from the enabling position into the rest position upon release of the touch thereon;
- enabling the user interface when the user drag and maintain by a touch said icon in the enabling position; and
- disabling the user interface when the icon is or moves in the rest position.

8. Method according to claim 7, wherein said translation movement from the rest position to the enabling position is vertical and, preferably, from bottom to top, and preferably, said interface image comprises a picture wipe effect which moves on the screen together with said enabling icon so as to uncover the graphical control elements upon movement of the enabling icon from the rest position to the enabling position.

9. Method according to claim 8, wherein the enabling icons are two in number, arranged in the proximity of opposite right-hand and left-hand edges of the screen, respectively, so as to be each manoeuvrable by one of the two thumbs of the user holding the device with both hands, each icon dragging the other icon during movement.

10. Method according to claim 9 comprising the further steps of disabling installation parts placed within a predetermined distance from the spatial coordinates detected when the two enabling icons are not in the said enabling position, and are not simultaneously touched by the user.

11. Method according to claim 7 wherein is comprised the further step of disabling, in function of the coordinates detected, installation parts placed within a predetermined distance from the spatial coordinates detected when said icon is enabled or moves in said rest position.

12. Method according to claim 7 wherein the duration of a touch by the user on a point of contact on the touch sensitive screen is detected, and when the enabling icon is in the enabling position, a magnified area of the interface in close to that point when the duration of the detected touch exceeds a first predetermined time is displayed.

13. Method according to claim 12, wherein after zooming the enlarged area is returned to its no zoomed size after a second predetermined time has elapsed from the end of the touch that caused the enlargement and / or in which after zooming the interface zone that is magnified is moved together with a movement of the contact point by the user.

14. Industrial installation comprising a control unit (12) and a portable computerized control device (13) connected via a wireless communication channel (14) to the control unit, the portable computerized device (14) comprising a screen, a CPU, a memory, and a spatial coordinates detector (18), the screen showing different graphical interface parts on CPU command in function of the spatial coordinates of the device, detected by the spatial coordinates detector (18) of the device, relatively to installation parts (11).

15. Installation according to claim 14, **characterized in that** it comprises one or more global reference position units (25) communicating with the detector (18) to provide the absolute position of the portable device with respect to installation parts (11).

16. Installation according to claim 14, **characterized in that** the portable device (13) also comprises an orientation detector (18) and said spatial coordinates also comprise an orientation information of the device.

17. A graphical user interface on a portable control computer device of industrial installations, said device comprising a graphical touch screen a CPU, a memory and a spatial coordinates detector, the interface comprising interface parts referred to installation and which are alternately displayed in function of the spatial coordinates detected.
